(19) Europäisches Patentamt

European Patent Office

Office européen des brevets

(11) EP 1 626 308 A1

(12) EUROPEAN PATENT APPLICATION

(43) Date of publication:
15.02.2006 Bulletin 2006/07

(51) Int Cl.:
G02F 1/39 (2006.01)     H04B 10/17 (2006.01)

(21) Application number: 04292051.2

(22) Date of filing: 13.08.2004

(84) Designated Contracting States:
AT BE BG CH CY CZ DE DK EE ES FI FR GB GR
HU IE IT LI LU MC NL PL PT RO SE SI SK TR
Designated Extension States:
AL HR LT LV MK

(71) Applicant: ALCATEL
75008 Paris (FR)

(72) Inventors:
• Durecu, Anne
  F-91460 Marcoussis (FR)
• Simonneau, Christian
  F-92150 Antony (FR)

• Mussot, Arnaud
  F-25000 Besancon (FR)
• Sylvestre, Thibaut
  F-25000 Besancon (FR)
• Lantz, Eric
  F-25000 Besancon (FR)
• Mailotte, Hervé
  F-25000 Besancon (FR)

(74) Representative: Urlichs, Stefan et al
Alcatel
Intellectual Property Department
70430 Stuttgart (DE)

(54) **Fiber optical parametric amplifier and method for amplification of optical signals with a fiber optical parametric amplifier**

(57)     Method for amplifying a plurality of optical signals using a fiber optical parametric amplifier and the corresponding four-wave mixing effect between a pump signal and the optical signals, wherein, the pump signal frequency and/or the optical signal frequencies are chosen such, that the amount of the difference between the pump frequency and the optical signal frequency, which is closest to the pump frequency, is not a multiple of the inter-spacing of the optical signals.

Fig. 1

## Description

Field of the invention:

The invention relates to a fiber optical parametric amplifier, and to a method for amplifying a plurality of optical signals with a fiber optical parametric amplifier, and, more specifically, to a method for amplifying optical signals and a fiber optical parametric amplifier using four-wave mixing.

The optical signals are preferably provided in form of WDM channels.

Background of the Invention

Four-wave mixing (FWM) have been an area of interest for applications in fiber optic communication system for several years. At the begin, the work was focused on the creation of a fast-conjugated wave which could be used for dispersion compensation, and some work on all-optical demultiplexing for high data rates. The process of four-wave mixing (FWM) have been shown in dispersion-shifted fibers (DSF) and in semiconductor optical amplifiers (SOAs). Experiments in DSF did show a greater than 100 % efficiency and thus parametric amplification, but to reach substantial amplification a pulse pump had to be used. New fibers with very high non-linear coefficient are developed in resent years and the CW-amplification have been increased to. In particular, the progress in the design of photonic crystal fibers (PCFs) with high non-linear coefficient enables high amplification in very short fiber length. PCFs have a low effective area which increases the efficiency of non-linear effects. PCFs with a low effective area enables high amplification.

The four-wave mixing (FWM) is a non-linear parametric process which utilizes the third order non-linearity of an optical material, e.g. an optical fiber. The process transfers energy from an intense light wave, e.g. a laser pump, to a neighboring, weaker signal and to a new idle wave, which is created to conserve energy. When the FWM-efficiency is higher than 0 dB, the process is generally referred to as parametric amplification. For all parametric processes there must be a phase-matching between the pump and the signal. In optical fibers, where the distances are long, this is in particular achieved, when the pump is positioned at or close to the zero-dispersion wavelength. This will limit the tunability of the pump, but with a short fiber with a very flat dispersion sloop, the pump can be changed over a wider region.

Since the fiber optical parametric amplifier (FOPA) will created a new, conjugate wave simultaneous to the amplification of the signal, it can be used for wave length conversion in all - optical WDM-systems. Thereby, the idle wave, e.g. is filtered out, while both the pump and the input signal is blocked. The conversion can be made transparent or even with inherent gain and the output is optical phase conjugated to the input. Thus, a fiber optical parametric amplifier (FOPA) can also be considered as a wavelength converter based on four-wave mixing.

In IEEE Photonics Technology letters, vol. 15, NO. 8, August 2003, pages 1061 - 1063, "Amplification of WDM signals in fiber-based optical parametric amplifiers" the performance of fiber-based optical parametric amplifiers in wave length-division-multiplex (WDM) applications is described. The measurements show the performance in terms of power and gain versus input - output signal power. Limiting effect such as cross-gain saturation (XGS) due to pump depletion and four-wave mixing (FWM) are discussed. At high power levels, channel interaction from XGS and FWM reduces the performance. However, the later only accrue when more than two channels are present. The penalty from FWM is caused by the appearance of an idle wave from two signals at the same wave length as the third. It is suggested to remove this effect by carefully chosen the signal wave length, i.e. to detune one of the wave length resulting in an unequal channel spacing. In this case the penalty from FWM in a three-channel WDM system is removed.

US 5,604,618 describes an optical parametric circuit for separating four-wave-mixing waves (FWM Waves) from signal waves and/or pump waves. By inputting the signal waves and the pump waves from different input ports of the directional coupler, it is possible to separate amplified signal waves and the FWM waves from the pump waves. By adjusting the length and the propagation constance of the dispersive optical media, the amplified signal waves are separated from the pump waves and the FWM wave.

Summary of the Invention

It is therefore an object of the present invention to provide a method for amplifying a plurality of optical signals as well as a fiber optical parametric amplifier which is more efficient.

It is a further object of the invention to provide such a method and such a fiber optical parametric amplifier assuring a better performance in terms of power penalty and gain versus input-output signal power, in particularly less limitation caused by four-wave mixing.

These objects are achieved by a method according to claim 1 and a fiber optical parametric amplifier according to claim 6.

A method according to the invention for amplifying a plurality of optical signals uses a fiber optical parametric amplifier and the corresponding four-wave mixing effect between a pump signal and the optical signals, wherein the pump signal frequency and/or the optical signal frequencies are chosen such, that the amount of the differences between the pump frequency and the optical signals frequency, which is closest to the pump frequency is not a multiple of the inter-spacing of the optical signals.

A fiber optical parametric amplifier according to the invention comprises a high power pump source, means for input a plurality of optical signals, means for coupling and a non-linear fiber for amplifying a plurality of optical signals using the four-wave mixing effect between a pump signal and the optical signals, wherein the pump signals frequency and/or the optical signal frequencies are chosen such, that the amount of the difference between the pump frequency and the optical signal frequency, which closest to the pump frequency, is not a multiple of the inter-spacing of the optical signals.

A part of the invention is to realize, that optical frequencies generated by four-wave mixing between the pump and the optical signals and located near the pump frequency are a source of cross talk at the first channels of the amplification band, i.e. the optical signals located near the pump frequency or wavelength, respectively. To overcome the problem, the location of the pump frequency is chosen carefully with regard to the frequency/ wavelength of the optical signals, in particularly provided in form of WDM channels, and to the inter-spacing, toward that the new generated frequencies do not correspond to the frequencies of the optical signals/channels. This is realized by determining the pump signal frequency with respect to the optical signal frequencies such, that the amount of the difference between the pump frequency and the optical signal frequency, which is closest to the pump frequency, is not a multiple of the inter-spacing of the optical signals.

According to a preferred embodiment of the invention, the plurality of optical signals are provided in form of a set of wavelength-division-multiplexed (WDM) channels.

The wavelength-division-multiplexed- (WDM) channels have preferable a equal channel spacing.

According to a preferred embodiment of the invention, the optical pump frequency is chosen such, that

$$|\nu_p - \nu_1| = (N+0.5)\,\Delta\nu$$

with

$\nu_P$     is the optical frequency of the pump

$\nu_1$     is the frequency of the optical signal closets to the pump wavelength,

$\Delta\nu$     is the inter-spacing of the optical signals, and where

N     is an integer.

Such a solution provides an optimum position for the pump frequency, because the frequencies of the optical signals generated by four-wave mixing lie not only between the frequencies of the plurality of the optical signals, e.g. the WDM channels, but in the middle between said frequencies.

In a further preferred embodiment of the invention, the FOPA comprises a plurality of pumps with different frequencies. At least the frequency of one pump of the FOPA is chosen according to the invention, preferably the frequency of the pump which is closest to the optical signal frequency.

Further advantages and developments of the invention are apparent from the description and the accompanying drawings.

It is to be understood that the aforementioned features and the features explained below can be used not only in the respective combinations described but also in other combinations or alone without departing from the scope of the present invention.

Short Description of the Drawings

The invention will become more apparent from the following description of an embodiment taking in conjunction with the accompanying drawings, in which:

Fig. 1     shows a diagram of fiber optical parametric amplifier,

Fig. 2     shows a schematic representation of frequency positions of the signals with respect to four-wave mixing,

Fig. 3     shows a bad position of the pump frequency with regard to optical signal frequencies,

Fig. 4     shows a schematic representation of an optimal position of the pump frequency with respect to the optical signal frequencies, and

Fig. 5     shows a schematic representation of frequency positions of signals with respect to four-wave mixing and a 2-pump fiber optical parametric amplifier.

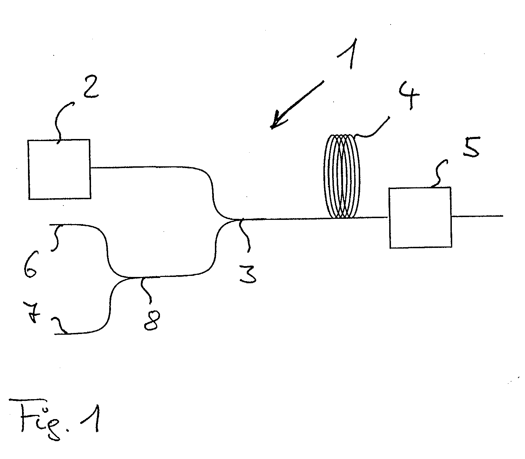

Fig. 1 shows a schematic block diagram of an fiber optical parametric amplifier (FOPA). A fiber optical parametric amplifier is in general a multifunctional device, which can be used at several applications in an all-optical communication systems. Fiber optical parametric amplifier shows performance as high performance amplifiers, simple tools generation and ultra-fast all-optical assembling, or achieve in highly non-linear optical fiber.

The FOPA 1 comprises a high power pump source 2, means for coupling 3, e.g. an optical coupler or a multiplexer, a high non-linear fiber (HLNF) 4 and an optical band pass filter (OBPF) 5. An optical signal or a plurality of optical signals 6, 7 to be amplified are feed to the FOPA 1. The optical signals 6, 7 are coupled with the pump signal via the coupler 3. The plurality signals 6, 7 may be coupled before with another optical coupler 8. The pump signal is provided by a high power pump source, preferable a continuous wave laser. Even the reference sign 2 denotes one block, the high power pump source could be an arrangement of devices, for example a distributed feedback (DFB) laser with a subsequent arranged erbium-doped fiber amplifier (EDFA). Furthermore the FOPA 1 may comprise (not shown) polarization controllers and phase modulators in the optical signal line and/or pump signal line. The optical signals 6, 7 are preferable applied in form of WDM channels. The WDM channels 6, 7 are combined together with the pump signal through the optical coupler 3 into the HNLF 4 performing the amplifying and four-wave mixing of the signals.

The OBPF 5 is in particularly provided, if the FOPA 1 is used as an optical amplification device. The OBPF 5 is used as a wavelength filter which passes only the amplified optical signals.

The FOPA can also be considered as a wavelength converter based on four-wave mixing, in particularly if there is less performance of amplifying.

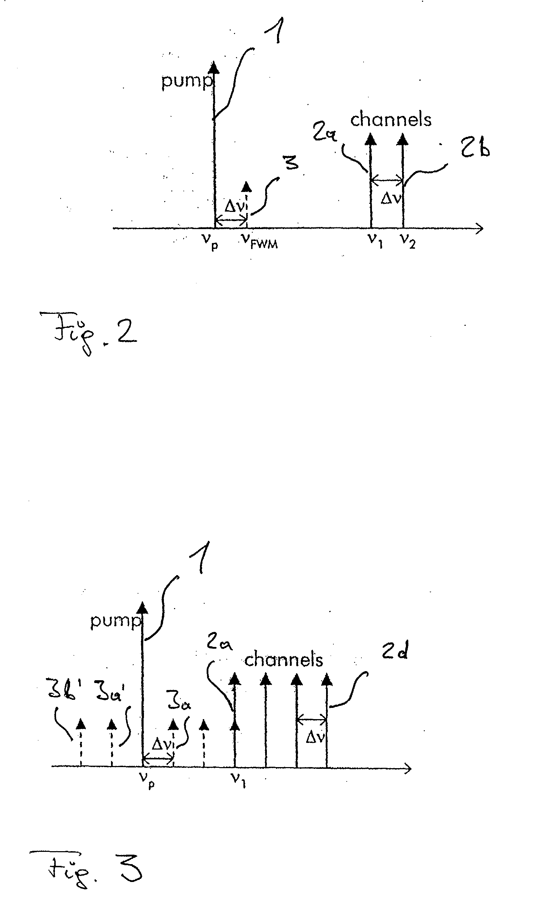

Figure 2 shows schematically a diagram illustrating the position of frequencies of optical signals, i.e. the original optical signals to be amplified, the pump signal and the generated optical signals, with respect to four-wave mixing. The optical signals to be amplified are exemplary shown as a set of WDM channels. First the invention is described exemplary for of a one-pump fiber optical parametric amplifier.

In a one-pump fiber optical parametric amplifier, optical frequencies 3 are generated by four-wave mixing between the pump (signal) 1 and the set of WDM channels 2a, 2b. The encountered problem is the generation of a new optical frequency $\nu_{FWM}$ due to a four-wave mixing effect between the pump frequency vp and the 2 channels $\nu_1$ and $\nu_2$, wherein $\nu_{FWM} = \nu p + \nu_2 - \nu_1$. Figure 2 shows a simplified case with only 2 channels. In the case of several WDM channels, many optical frequencies are generated around the pump with a spectral spacing of $\Delta\nu$. These frequencies are located near the pump wavelength and are a source of cross-talk on the first channels of the amplification band.

To overcome this problem, the location of the pump frequency/wavelength 1 can be carefully chosen with regard to the frequency/wavelengths of the WDM channels 2 and to the inter-channel spacing $\Delta\nu$, so that the new generated signal frequencies 3 do not correspond to the optical frequencies/wavelengths of the channels 2.

By noting vp the optical frequency of the pump signal 1 and $\nu_1$ the optical frequency of the channel 2a which is the closest to the pump 1, the pump frequency 1 must be chosen such as $|\nu p - \nu_1|$ is not a multiple of $\Delta\nu$.

A set of WDM channels 2 with a regular spectral spacing of $\Delta\nu$ is now considered for the purpose of simplicity. The worst configuration that must be avoided is depicted in Figure 2. It consists in setting the pump frequency 1 such as $|\nu p - \nu_1|$ is a multiple of $\Delta\nu$, wherein vp is the optical frequency of the pump and $\nu_1$ of the channel 2 which is the closest to the pump 1. In this case, the generated frequencies 3 are exactly equal to the optical frequencies of the channels 2, which represents a source of cross-talk.

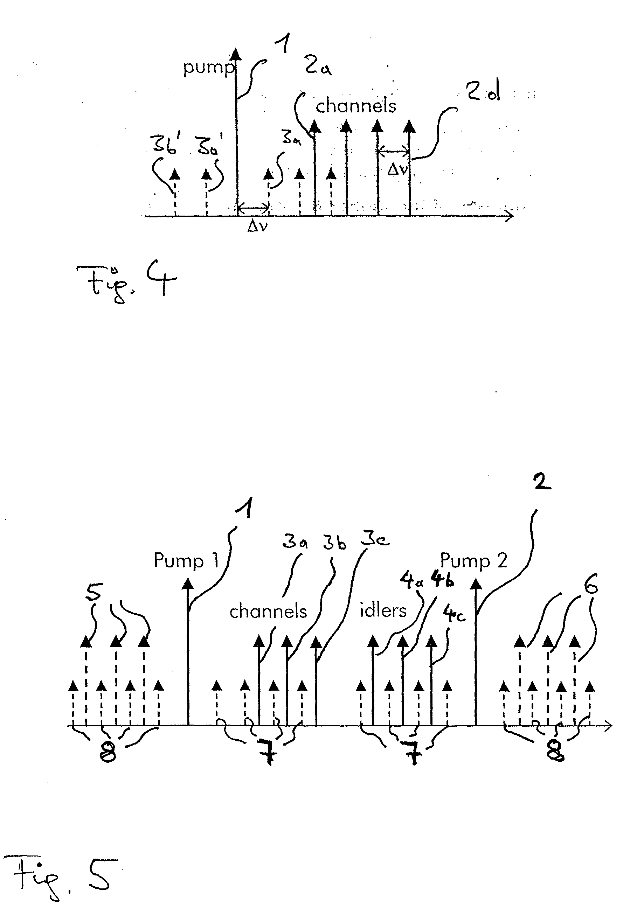

To avoid the superimposition of the generated frequencies with the channels, the optical frequency of the pump must be chosen so that $|\nu p - \nu_1|$ is not a multiple of $\Delta\nu$. The best positions of the pump are such as: $|\nu p - \nu_1| = (N+0.5) \Delta\nu$, where N is an integer. This case is depicted in Figure 3.

Following, the invention is described for a fiber optical parametric amplifier (FOPA) having several pumps, exemplary a 2-pump FOPA. It is obviously for a person skilled in the art to apply the invention to further FOPA's like a 3-pump or 4-pump FOPA.

Figure 5 shows the case for a 2-pump FOPA. In 2-pump parametric amplifiers, the amplification spectral band is located between both pumps. The frequencies of the pumps are usually chosen with regard to the dispersion and the dispersion slope. The amplification band is located where channels are. The 2-pump FOPA has a first pump frequency 1 and a second pump frequency 2. The channels 3 a-c with equal channel spacing are shown. Different four-wave mixing components/signals with different output power are generated. The power of the idlers components 4 a-c is proportional to the product of the power of the first pump, the second pump 2, and the channel 3.

The idler components 4 are in particular of interest, if the amplifier is used as a wavelength converter. Furthermore, FWM components 5 and 6 are generated on the left of pump 1 and the right of pump 2. They are located outside the channel band and the idlers band. In this case, they will not create cross-talk on channels 3a-c or idlers 4. The power of the components 5 and 6 is proportional to the squared power of the respective pump by the channel power.

Reference sign 7, 8 denotes FWM components which power is proportional to the respective pump power by the squared channel power. Part of these components, the components 7, are generated in the channel band and idlers band and can be a source of cross-talk.

The method an a FOPA according to the invention, used to reduce the cross-talk, impose a new constraint on the choice of the pump frequencies. The setting of the pump frequency as described above for the 1-pump parametric amplifier, is applied to the frequency of the 2-pump parametric amplifier. According to the invention, the setting is applied at least to one pump (frequency) of the 2-pump FOPA, preferably to the frequency of the pump closest to the channels. In an advantageous embodiment, the setting is applied to of both pump frequencies.

The best position of the pump 1 and pump 2 are the following:

For pump 1 :

$$| \nu_{p1} - \nu_{11} | = (N+0.5) \Delta\nu ,$$

and for pump 2:

$$| \nu_{p2} - \nu_{12} | = (N+0.5) \, \Delta \nu ,$$

where

$\Delta \nu$    is the inter-channel spacing
$N$    is an integer
$\nu_{p1}$    is the frequency of pump 1
$\nu_{p2}$    is the frequency of pump 2
$\nu_{11}$    is the frequency of the channel closest to the pump 1, and,
$\nu_{12}$    is the frequency of the channel closest to the pump 2.

**Claims**

1. Method for amplifying a plurality of optical signals using a fiber optical parametric amplifier and the corresponding four-wave mixing effect between a pump signal and the optical signals, **characterised in that**, the pump signal frequency and/or the optical signal frequencies are chosen such, that the amount of the difference between the pump signal frequency and the optical signal frequency, which is closest to the pump frequency, is not a multiple of the inter-spacing of the optical signals.

2. Method according to claim 1, **characterised in that**, the plurality of optical signals are provided in form of a set of wavelength-division-multiplexed channels.

3. Method according to claim 2, **characterised in that**, the set of wavelength-division-multiplexed channels has a equal channel spacing.

4. Method according to one of the claim 1 to 3, **characterised in that**, the optical pump frequency is chosen such, that

$$|\nu_{p} - \nu_{1}| = (N+0.5) \, \Delta \nu$$

with

   $\nu_{p}$ is the optical frequency of the pump
   $\nu_{1}$ is the frequency of the optical signal closest to the pump wavelength,
   $\Delta \nu$ is the inter-spacing of the optical signals, and where
   $N$ is an integer.

5. Method according to one of the claims 1 to 4, **characterised in that**, the fiber optical parametric amplifier comprises a plurality of pumps with different frequencies, wherein the method is applied to at least one pump frequency, in particular to the frequency of the pump which is closest to the optical signal frequency.

6. Fiber optical parametric amplifier comprising a high power pump source, means for input a plurality of optical signals, means for coupling and a non-linear fiber, wherein the optical signals are amplified by the fiber optical parametric amplifier and the corresponding four-wave mixing effect between a pump signal and the optical signals, **characterised in that**, the pump signal frequency and/or the optical signal frequencies are chosen such, that the amount of the difference between the pump frequency and the optical signal frequency, which is closest to the pump frequency, is not a multiple of the inter-spacing of the optical signals.

7. Fiber optical parametric amplifier according to claim 6, **characterised in that**, the plurality of optical signals, which are amplified with the fiber optical parametric amplifier, are provided in form of wavelength-division-multiplexed channels.

8. Fiber optical parametric amplifier according to claim 7, **characterised in that**, the set of wavelength-division-multiplexed channels has a equal channel spacing.

9. Fiber optical parametric amplifier according to one of the claims 6 to 8, **characterised in that**, the optical pump frequency is chosen such, that

$$|\nu_{p} - \nu_{1}| = (N+0.5) \, \Delta \nu$$

with

   $\nu_{P}$ is the optical frequency of the pump
   $\nu_{1}$ is the frequency of the optical signal closets to the pump wavelength,
   $\Delta \nu$ is the inter-spacing of the optical signals, and where
   $N$ is an integer.

10. Fiber optical parametric amplifier according to one of the claims 6 to 9, **characterised in that**, the fiber optical parametric amplifier comprises a plurality of pumps with different frequencies, wherein said choosing is made at least for one pump frequency, in particular for the frequency of the pump which is closest to the optical signal frequency.

Fig. 1

Fig. 2

Fig. 3

**Fig. 4**

pump 1 2a channels 2d

3b' 3a' 3a Δν

Δν

**Fig. 5**

Pump 1 1 3a 3b 3c Pump 2 2

5 channels idlers 4a 4b 4c 6

8 7 7 8

# EP 1 626 308 A1

**European Patent Office**

## EUROPEAN SEARCH REPORT

Application Number

EP 04 29 2051

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| X | US 2003/219258 A1 (ELLIS ANDREW D ET AL) 27 November 2003 (2003-11-27)<br>* paragraph [0004] *<br>* paragraph [0044] *<br>* paragraph [0055] - paragraph [0058] *<br>* paragraph [0078] - paragraph [0079] *<br>* figure 7 * | 1-10 | G02F1/39<br>H04B10/17 |
| X | CHAVEZ BOGGIO J M ET AL: "Performance of a two-pump fiber optical parametric amplifier in a 10 Gb/s x 64 channel dense wavelength division multiplexing system" OPTICS COMMUNICATIONS, NORTH-HOLLAND PUBLISHING CO. AMSTERDAM, NL,<br>vol. 218, no. 4-6,<br>1 April 2003 (2003-04-01), pages 303-310, XP004416698<br>ISSN: 0030-4018<br>* the whole document * | 1-10 | |
| X | CALLEGARI F A ET AL: "Crosstalk mitigation in fiber optic parametric amplifier"<br>LEOS 2002. 15TH. ANNUAL MEETING OF THE IEEE LASERS & ELECTRO-OPTICS SOCIETY. GLASCOW, SCOTLAND, NOV. 11 - 12, 2002, ANNUAL MEETING OF THE IEEE LASERS AND ELECTRO-OPTICS SOCIETY, NEW YORK, NY : IEEE, US,<br>vol. VOL. 1 OF 2,<br>13 November 2002 (2002-11-13), pages 383-384, XP010622196<br>ISBN: 0-7803-7500-9<br>* the whole document * | 1-10 | **TECHNICAL FIELDS SEARCHED** (Int.Cl.7)<br><br>G02F |

-/--

The present search report has been drawn up for all claims

| Place of search | Date of completion of the search | Examiner |
|---|---|---|
| The Hague | 26 November 2004 | Boubal, F |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

9

**European Patent**
**Office**

**EUROPEAN SEARCH REPORT**

Application Number

EP 04 29 2051

## DOCUMENTS CONSIDERED TO BE RELEVANT

| Category | Citation of document with indication, where appropriate, of relevant passages | Relevant to claim | CLASSIFICATION OF THE APPLICATION (Int.Cl.7) |
|---|---|---|---|
| A | FORGHIERI F ET AL: "WDM SYSTEMS WITH UNEQUALLY SPACED CHANNELS" JOURNAL OF LIGHTWAVE TECHNOLOGY, IEEE. NEW YORK, US, vol. 13, no. 5, 1 May 1995 (1995-05-01), pages 889-897, XP000521011 ISSN: 0733-8724 * the whole document * ----- | 1 | |

TECHNICAL FIELDS
SEARCHED (Int.Cl.7)

The present search report has been drawn up for all claims

| Place of search | Date of completion of the search | Examiner |
|---|---|---|
| The Hague | 26 November 2004 | Boubal, F |

CATEGORY OF CITED DOCUMENTS

X : particularly relevant if taken alone
Y : particularly relevant if combined with another
    document of the same category
A : technological background
O : non-written disclosure
P : intermediate document

T : theory or principle underlying the invention
E : earlier patent document, but published on, or
    after the filing date
D : document cited in the application
L : document cited for other reasons
 
& : member of the same patent family, corresponding
    document

EPO FORM 1503 03.82 (P04C01)

**ANNEX TO THE EUROPEAN SEARCH REPORT
ON EUROPEAN PATENT APPLICATION NO.**

EP 04 29 2051

This annex lists the patent family members relating to the patent documents cited in the above-mentioned European search report.
The members are as contained in the European Patent Office EDP file on
The European Patent Office is in no way liable for these particulars which are merely given for the purpose of information.

26-11-2004

| Patent document cited in search report | Publication date | Patent family member(s) | Publication date |
|---|---|---|---|
| US 2003219258 A1 | 27-11-2003 | WO 03101033 A1 | 04-12-2003 |

EPO FORM P0459

For more details about this annex : see Official Journal of the European Patent Office, No. 12/82